Europäisches Patentamt

European Patent Office

Office européen des brevets

(19)

(11) Numéro de publication : **0 067 760**
**B1**

(12) # FASCICULE DE BREVET EUROPÉEN

(45) Date de publication du fascicule du brevet :
24.04.85

(21) Numéro de dépôt : 82401017.7

(22) Date de dépôt : 04.06.82

(51) Int. Cl.⁴ : **B 65 G 47/14, B 65 G 47/24**

(54) **Dispositif de distribution, d'orientation et de positionnement d'axes sur machine automatique.**

(30) Priorité : **10.06.81 FR 8111434**

(43) Date de publication de la demande :
**22.12.82 Bulletin 82/51**

(45) Mention de la délivrance du brevet :
**24.04.85 Bulletin 85/17**

(84) Etats contractants désignés :
**DE IT**

(56) Documents cités :
**FR-A- 500 732**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Lacroix, Marc**
**24, rue Jules Bidard**
**F-78220 Viroflay (FR)**
Inventeur : **Bienvenu, Raymond**
**42, rue Victor Hugo**
**F-94320 Thiais (FR)**

Jouve, 18, rue St-Denis, 75001 Paris, France

EP 0 067 760 B1

## Description

L'invention concerne la séparation, l'orientation et le positionnement de pièces sensiblement cylindriques comportant au moins un plat pour le positionnement d'une autre pièce, en particulier pour l'alimentation automatique d'une machine à souder les crabots sur les axes de fourchettes des boîtes de vitesses.

Ces axes, usinés au préalable, comportent au moins un plat et le plus souvent divers autres usinages d'indexation tels que rainures et encoches pour le positionnement indexé d'autres pièces sur l'axe, et le problème principal consiste à les positionner et les orienter avec précisions sur une machine à souder qui vient y fixer le crabot d'axe de fourchette. Ce dernier est constitué par une pièce comportant une partie plane qui vient s'appliquer sur ledit plat et qui s'y trouve soudée, généralement par faisceau d'électrons.

Habituellement, les axes sont déposés par quantité dans un vibreur à action rectiligne comportant une porte de sortie obturée partiellement par une lame d'orientation. Sous l'effet de la vibration, l'axe se trouvant près de la porte tourne sur lui-même jusqu'à ce qu'un usinage approprié dont il est muni, qui est par exemple le cran de point mort ou un autre usinage spécialement prévu pour son orientation angulaire, se présente parallèlement à la lame d'orientation. L'axe en question peut alors s'échapper par la porte et descendre le long d'une rampe où il est maintenu orienté par la continuation de la lame d'orientation, tandis que le processus recommence avec le nouvel axe qui se présente devant la porte.

Un tel dispositif présente de nombreux inconvénients liés à la mise en vibration de l'ensemble des axes en attente et qui représente une masse importante. En particulier, ces dispositifs ont une autonomie faible, généralement limitée à 20 pièces, et sont extrêmement bruyants. Ils sont de plus sujets à des coincements fréquents, et du fait que l'indexage s'effectue sur un usinage autre que le plat d'accostage avec le crabot, il n'est pas utilisable avec tous les axes de boîtes de vitesses. Enfin, le processus utilisé est relativement lent et mal adapté aux cadences élevées autorisées par les machines de soudage à faisceau d'électrons.

On connaît par ailleurs du brevet FR 500 732 un dispositif d'alimentation d'axes comportant une goulotte et des guides mais qui ne propose aucun moyen permettant de résoudre le problème posé d'orientation angulaire des pièces cylindriques autour de leur axe longitudinal.

Le but de l'invention est d'éliminer les inconvénients précédents en réalisant un dispositif non vibrant, rapide et efficace, qui réalise directement l'orientation à partir du plat d'accostage du crabot, et en partant d'axes disposés en vrac en quantité dans une réserve importante.

Dans ce but l'invention propose un dispositif de séparation, d'orientation et de positionnement d'axes cylindriques comportant au moins un plat fonctionnel, du type comportant une goulotte fixe munie d'une ouverture de fond capable de recevoir plusieurs axes, refermée par un tiroir, lequel est animé d'un mouvement de va-et-vient à partir d'une position reculée pour laquelle il démasque une ouverture étroite juste suffisante pour permettre la chute d'un seul axe, ladite goulotte comportant intérieurement des guides terminés par un bord inférieur ne laissant subsister au-dessus du niveau supérieur du tiroir qu'un passage horizontal suffisant pour une seule rangée d'axes jusqu'à ladite ouverture étroite, caractérisé par le fait qu'il comporte des lames de roulement situées en dessous de l'ouverture étroite et déportées latéralement pour ne recevoir ledit axe que sur sa partie cylindrique lors de sa chute, et qui se prolongent par des rampes descendantes amenant chacun des axes sur deux lames de roulement-glissement qui coopèrent avec deux poussoirs, ainsi qu'un piège porté par le tiroir et dont la face inférieure est située au dessus de la partie de l'axe comportant ledit plat fonctionnel, pour produire le roulement de l'axe jusqu'à ce que ce dernier vienne occuper une position angulaire prédéterminée par rapport à son axe longitudinal puis le glissement de cet axe sans rotation supplémentaire jusqu'à la position voulue, ce piège étant à cet effet décalé horizontalement d'environ un diamètre d'axe au-delà de l'aplomb des poussoirs et verticalement sensiblement de la cote de l'axe mesurée sur le plat au-dessus de la lame de roulement-glissement correspondante.

L'appareil est adaptable immédiatement à divers types et à diverses dimensions d'axes, et il se prête à diverses variantes d'utilisation.

D'autres particularités de l'invention apparaîtront dans la description qui va suivre d'un mode de réalisation pris comme exemple et représenté sur le dessin annexé, sur lequel :

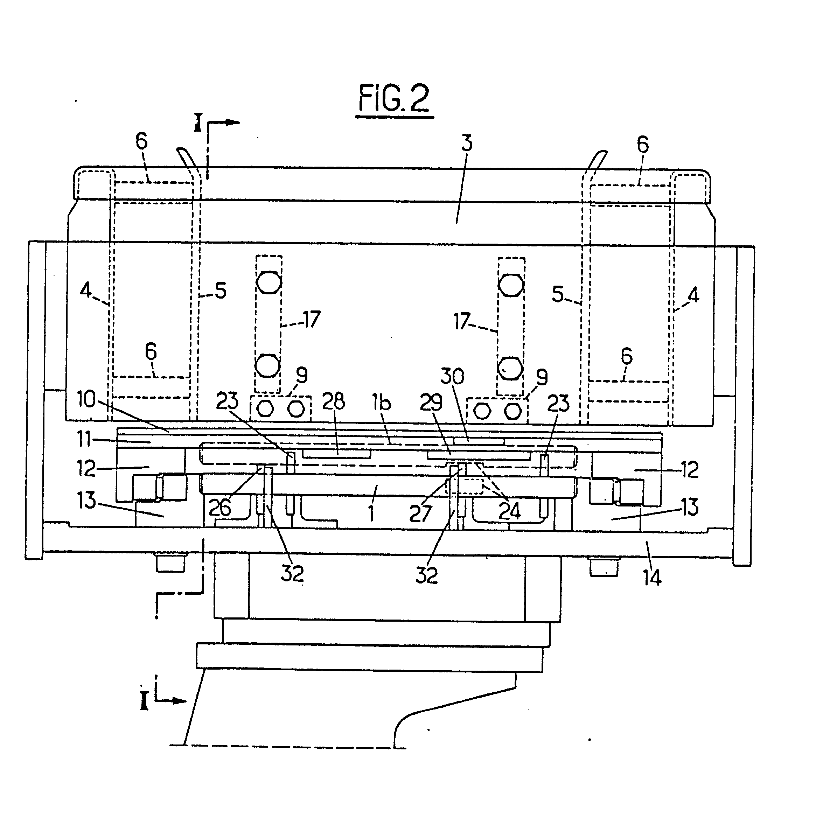

la figure 1 est une coupe verticale longitudinale selon I-I de la fig. 2 ; et

la figure 2 est une vue en bout de l'appareil.

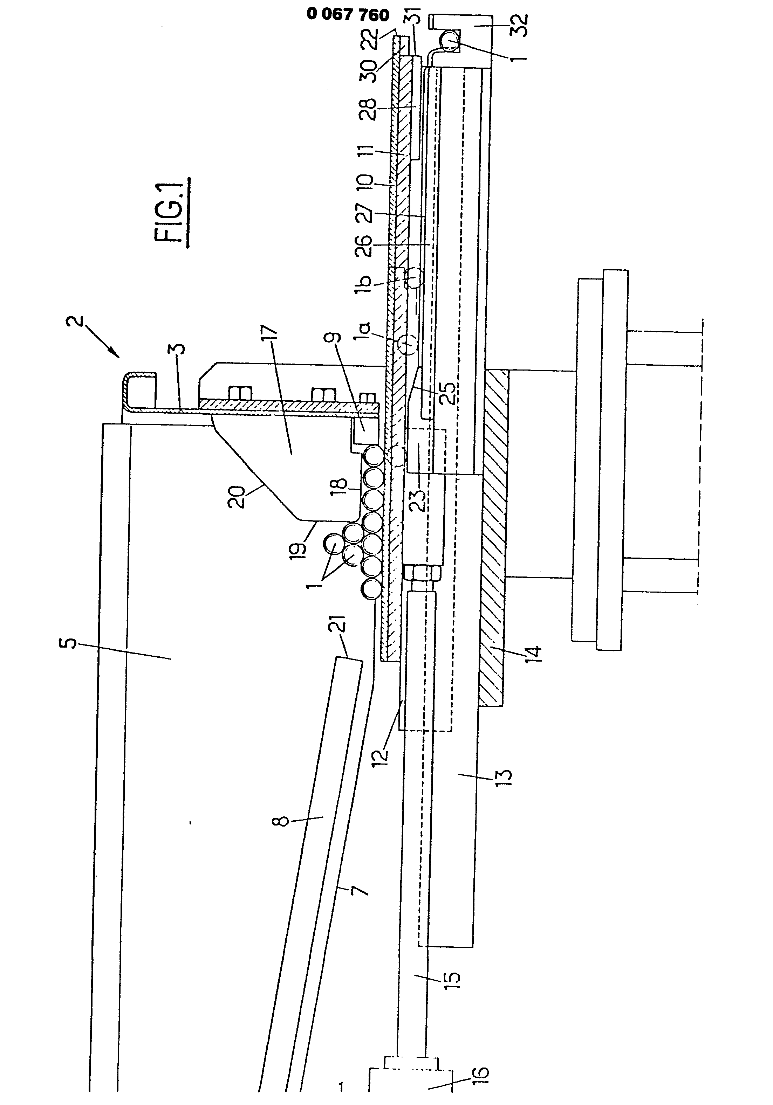

Les axes 1, dont quelques-uns seulement ont été représentés sur la fig. 1, sont déposés en grand nombre dans une goulotte 2 limitée par une paroi avant 3 et des parois latérales 4, avec en outre des flasques latéraux 5 fixés à ces parois 4 par des entretoises 6 pour permettre d'adapter l'appareil à diverses longueurs d'axes 1 par simple échange de ces entretoises 6. Au-dessus du fond 7 de la goulotte 2 sont disposés deux rails de fond 8 qui sont réglables, grâce à un dispositif de vis non représenté, par coulissement dans le sens de leur propre axe. Des cales 9 sont fixées à la base de la paroi avant 3 de la goulotte à l'endroit où les axes 1 viennent s'appuyer, et en outre, le fond 7 de la goulotte ainsi que les rails de fond 8 s'arrêtent à une certaine distance de ces cales 9 pour ménager une large ouverture de fond qui est refermée par la plaque supérieure 10 d'un tiroir 11. Celui-ci coulisse horizontalement et perpendiculairement aux axes 1 grâce à des glissières mobiles 12 dont il est muni et qui glissent sur des glissières fixes 13 solidaires de la table 14 de l'appareil. Ce tiroir 11 est solidaire de l'extrémité de la tige 15 d'un vérin 16 qui permet de le déplacer d'un mouvement de va-et-vient.

A l'intérieur de la goulotte 2 et contre la paroi avant 3 se trouvent fixés deux guides 17 qui comportent chacun essentiellement un bord inférieur 18 horizontal situé au-dessus de la surface supérieure de la plaque 10 à une distance juste suffisante pour permettre à une seule rangée d'axes 1 de parvenir jusqu'aux cales 9. Chacun de ces guides comporte en outre un bord vertical 19 prolongé par un bord supérieur 20 incliné pour ramener les axes 1 en direction de l'entrée du passage horizontal inférieur. En outre, conformément à l'invention, pour éviter que les axes 1 puissent se bloquer mutuellement à l'entrée de ce passage par une formation de « pont », il est prévu de régler la position axiale des rails de fond 8 de telle manière qu'entre l'extrémité 21 de chacun de ces rails 8 et la cale 9 correspondante, il y ait la place pour loger un nombre entier d'axes, plus un jeu global d'environ 2 à 3 mm. De cette manière lors de chaque mouvement d'aller et retour de la plaque 10, les axes 1 sont soumis à des mouvements de rotation sur eux-mêmes et un léger déplacement latéral qui empêche toute formation de pont.

La fin de course du tiroir 11 correspondant à la rétraction du vérin 16 et la dimension des cales 9 sont réglées de telle manière qu'entre l'extrémité 22 de la plaque 10 et les cales 9 il subsiste une ouverture juste suffisante pour laisser tomber le premier axe qui est en contact avec les cales 9.

Pour éviter que l'axe suivant se trouvant dans le passage horizontal ne vienne tomber à son tour, on dispose juste au-dessous de l'ouverture de chute deux lames de roulement 23 qui sont situées latéralement de manière à contacter chaque axe 1 sur une partie cylindrique, c'est-à-dire en particulier en dehors de la zone intéressée par le plat principal 24 d'accostage du crabot porté par cet axe.

Dans le mouvement en avant du chariot 11, la plaque 10 vient refermer l'ouverture de passage en poussant par son extrémité 22 l'axe qui repose ainsi sur les lames de roulement 23, ce qui force celui-ci à rouler sur ces lames puis à descendre les rampes descendantes 25 que comportent ces lames. Dans cette descente, l'axe vient alors reposer sur deux lames de roulement-glissement 26 et 27 destinées à produire l'indexation angulaire de l'axe. Pour cela le tiroir 11 comporte deux poussoirs 28 et 29 fixés en dessous, à une hauteur correspondant sensiblement à la hauteur moyenne de l'axe 1 lorsque celui-ci repose sur les lames 26 et 27. Par ailleurs, les deux poussoirs 28 et 29 sont positionnés de manière à pousser l'axe 1 en le maintenant à la perpendiculaire lorsque cet axe s'appuie sur les deux poussoirs 28 et 29.

Le tiroir 11 comporte en outre un piège 30 constitué par une pièce se terminant sensiblement à l'aplomb de l'extrémité 22 de la table 10 mais dépassant légèrement, d'environ un diamètre d'axe au-delà de l'extrémité frontale commune 31 des poussoirs 28 et 29, ces derniers se terminant par conséquent en retrait du piège 30.

De plus, la surface inférieure du piège 30, qui est située du côté de l'axe intéressé par le plat 24, se trouve constamment à une distance du bord supérieur de la lame 27 qui est inférieure au diamètre de l'axe 1 et égale ou légèrement supérieure à la cote de l'axe mesurée à partir du plat 24.

De la sorte, lorsque l'axe 1, en appui sur les lames de roulement-glissement 26 et 27, comporte son plat 24 orienté dans une position quelconque, il repose sur ces deux lames par des parties cylindriques comme représenté en 1a sur la fig. 1, ce qui le met dans une position inclinée par rapport à l'horizontale du fait que son extrémité correspondant au plat 24 se trouve plus élevée que l'autre extrémité, le niveau supérieur de la lame 27 étant naturellement réglé de manière que l'axe soit horizontal lorsqu'il repose par son plat. Du fait de cette inclinaison, l'axe se trouve poussé par l'extrémité frontale du piège 30 du côté correspondant à ce piège, et non par l'extrémité du poussoir 29 qu'il ne peut atteindre. L'axe se trouve donc également incliné dans le plan horizontal, c'est-à-dire non rigoureusement perpendiculaire aux glissières.

L'axe roule donc dans cette position sur les deux lames 26 et 27 jusqu'à ce que son plat s'applique sur le bord supérieur de la lame 27. Ceci produit alors la mise à l'horizontale de l'axe, et de ce fait son passage sous la pièce comme représenté schématiquement en 1b sur la fig. 1. Dans la suite du mouvement, l'axe 1 se trouve donc immobilisé en rotation, puisqu'il est pris entre la lame 27 et la surface inférieure du piège 30, et de ce fait il ne peut plus rouler mais seulement glisser sur les deux lames 26, 27 en étant poussé cette fois par les deux poussoirs 28 et 29 dans une position bien perpendiculaire aux glissières.

Une fois que le tiroir 11 arrive à l'extrémité de sa course correspondant à l'extension du vérin 16, qui est la position représentée sur la fig. 1, l'axe bascule et tombe dans deux drageoirs 32 qui le maintiennent dans une position bien précise avec son plat 24 indexé verticalement par l'extrémité de la lame 27 qui se raccorde avec le bord horizontal par un profilage permettant ce basculement. C'est dans cette position précise et convenablement orientée qu'il sera repris par la machine de soudage destinée à appliquer puis à souder le crabot d'axe de fourchette sur le plat 24 de l'axe 1, c'est-à-dire le plat même qui a servi à l'indexage.

Il est clair que chaque mouvement d'aller et retour du tiroir sous l'action du vérin produit de même la séparation, la distribution, l'orientation et le positionnement précis d'un nouvel axe, quelle que soit la cadence adoptée par la machine de soudage.

La manœuvre du tiroir 11, par le seul vérin 16, peut être relativement silencieuse, et la goulotte 2 peut sans aucun inconvénient comporter une réserve importante d'axes sans que cela gène la manœuvre.

A titre de variante, il est possible d'indexer les axes avec leur plat en position supérieure en limitant latéralement la largeur du piège 30 de telle manière qu'il reste à l'intérieur des limites de la zone intéressée par le plat 24, et en positionnant au contraire la deuxième lame 27 de roulement-glissement à l'extérieur de cette zone. En outre, dans ce cas, on supprime le basculement en fin de course. Il est également possible à titre d'autre variante d'indexer les axes sur un premier plat, puis de produire un basculement par un ressaut ascendant ou descendant des lames de roulement-glissement afin de s'indexer sur un deuxième plat grâce à un décalage latéral des lames support. Toutes ces variantes ne changent naturellement rien au principe de l'indexation par coopération du piège 30 et des poussoirs 28 et 29 avec les lames de roulement-glissement 26 et 27 pour produire le roulement de l'axe jusqu'à l'orientation voulue, puis le blocage de cette rotation et le glissement ensuite, et le tout à la faveur d'un simple mouvement de tiroir.

**Revendications**

1. Dispositif de séparation, d'orientation et de positionnement d'axes cylindriques (1) comportant au moins un plat fonctionnel (24), du type comportant une goulotte fixe (2) munie d'une ouverture de fond capable de recevoir plusieurs axes, refermée par un tiroir (11), lequel est animé d'un mouvement de va-et-vient à partir d'une position reculée pour laquelle il démasque une ouverture étroite juste suffisante pour permettre la chute d'un seul axe, ladite goulotte comportant intérieurement des guides (17) terminés par un bord inférieur (18) ne laissant subsister au-dessus du niveau supérieur (10) du tiroir qu'un passage horizontal suffisant pour une seule rangée d'axes jusqu'à ladite ouverture étroite, caractérisé par le fait qu'il comporte des lames de roulement (23) situées en dessous de l'ouverture étroite et déportées latéralement pour ne recevoir ledit axe que sur sa partie cylindrique lors de sa chute, et qui se prolongent par des rampes descendantes (25) amenant chacun des axes sur deux lames de roulement-glissement (26, 27) qui coopèrent avec deux poussoirs (28, 29), ainsi qu'un piège (30) porté par le tiroir et dont la face inférieure est située au-dessus de la partie de l'axe comportant ledit plat fonctionnel (24), pour produire le roulement de l'axe jusqu'à ce que ce dernier vienne occuper une position angulaire prédéterminée par rapport à son axe longitudinal puis le glissement de cet axe sans rotation supplémentaire jusqu'à la position voulue, ce piège étant à cet effet décalé horizontalement d'environ un diamètre d'axe au-delà de l'aplomb des poussoirs (28, 29) et verticalement sensiblement de la cote de l'axe (1) mesurée sur le plat (24) au-dessus de la lame (27) de roulement-glissement correspondante.

2. Dispositif selon la revendication 1, caractérisé par le fait qu'il comporte des cales (9) servant de butées aux axes à la base de la paroi avant (3) de la goulotte (2), et des rails de fond (8) au-dessus de la paroi de fond (7) de cette goulotte, ces rails étant réglables dans le sens de leur axe de manière à amener leur face d'extrémité (21) à une distance desdites cales (9) qui laisse subsister ladite large ouverture d'une dimension correspondant à un nombre entier d'axes majoré d'un léger jeu global.

3. Dispositif selon l'une quelconque des revendications précédentes, caractérisé par le fait qu'une (27) des lames de roulement-glissement est située au-dessous de la partie des axes comportant le plat fonctionnel (24) et que le piège (30) comporte au moins une partie de sa largeur déportée latéralement pour ne recevoir les axes que sur leur partie cylindrique de manière qu'après la fin de la phase de roulement l'axe se trouve indexé avec son plat en position inférieure.

4. Dispositif selon la revendication 3, caractérisé par le fait qu'une au moins des lames de roulement-glissement est profilée pour qu'à l'extrémité de la course du tiroir l'axe bascule et tombe dans des drageoirs (32) dans une nouvelle position angulaire par rapport à son axe longitudinal.

5. Dispositif selon l'une des revendications 1 et 2, caractérisé en ce que le piège (30) est limité en largeur au-dessus de la partie de l'axe comportant le plat fonctionnel (24) et que la deuxième lame (27) de roulement-glissement n'est pas située en dessous de ladite partie de l'axe, de telle sorte qu'à la fin de la phase de roulement l'axe soit indexé angulairement avec le plat fonctionnel situé en position supérieure.

**Claims**

1. Apparatus for separating, orienting and positioning cylindrical shafts (1) comprising at least one functional flat (24), of the type comprising a fixed chute (2) provided with a bottom opening capable of receiving a plurality of shafts, being closed by a slide member (11) which is displaced with a reciprocating movement from a retracted position in which it uncovers a narrow opening that is just sufficient to permit a single shaft to fall, said chute internally comprising guides (17) which are terminated with a lower edge (18) which leaves above the upper level (10) of the slide member only a horizontal passage sufficient for a single row of shafts up to said narrow opening, characterised in that it comprises rolling plate members (23) which are disposed below the narrow opening and which are offset laterally to receive said shaft only on its cylindrical portion when it falls, and which are extended by descending ramps (25) which carry each of the shafts on to two rolling-sliding plate members (26, 27) which co-operate with two push members (28, 29), and a trap means (30) which is carried by the slide member and whose lower face is disposed above the part of the shaft carrying said functional flat (24), to produce the rolling movement of the shaft until the latter moves into a predetermined angular position with respect to its longitudinal axis and then the sliding movement of said shaft without further rotation to the desired position, said trap means being for that purpose displaced horizontally by about a shaft diameter beyond the perpendicular line of the push members (28, 29) and vertically substantially by the dimension of the shaft (1) as measured on the flat (24) above the corresponding rolling-sliding plate member (27).

2. Apparatus according to claim 1, characterised in that it comprises blocks (9) serving as abutments for the shafts at the base of the front wall (3) of the chute (2), and bottom rails (8) above the bottom wall (7) of said chute, said rails being adjustable in the direction of the axis thereof so as to dispose their end face (21) at a spacing from said blocks (9) which leaves saidwide opening of a dimension corresponding to a whole number of shafts, plus a slight total play.

3. Apparatus according to either one of the preceding claims, characterised in that one (27) of the rolling-sliding plate members is disposed below the part of the shafts carrying the functional flat (24) and that the trap means (30) comprises at least a portion of the width thereof, that is offset laterally to receive the shafts only on the cylindrical portion thereof whereby, after the end of the rolling phase, the shaft is disposed in an indexed position with its flat in a downward position.

4. Apparatus according to claim 3, characterised in that at least one of the rolling-sliding plate members is shaped so that at the end of the travel movement of the slide member the shaft tilts and drops into holding means (32) in a new angular position with respect to its longitudinal axis.

5. Apparatus according to one of claims 1 and 2, characterised in that the trap means (30) is limited in respect of width above the portion of the shaft carrying the functional flat (24) and that the second rolling-sliding plate member (27) is not disposed below said portion of the shaft, whereby at the end of the rolling phase the shaft is indexed angularly with the functional flat disposed in an upward position.

**Patentansprüche**

1. Vorrichtung zum Verteilen, Orientieren und Positionieren von zylindrischen Achsen (1), umfassend wenigstens eine Werkbühne (24) der Art, die eine feststehende Schurre (2) umfaßt, welche mit einer Bodenöffnung versehen ist zur Zufuhr mehrerer Achsen und durch einen Schieber (11) verschlossen ist, dem eine hin- und hergehende Bewegung erteilt wird aus einer zurückgezogenen Position, in der er eine Öffnung freigibt, die so schmal ist, daß nur eine Achse hindurchtreten kann, wobei die Schurre innere Führungen (17) aufweist, die in einem unteren Rand (18) enden, so daß oberhalb der oberen Höhe (10) des Schiebers nur ein horizontaler Durchlaß bestehen bleibt, der ausreicht für eine einzige Reihe von Achsen bis hin zur schmalen Öffnung, dadurch gekennzeichnet, daß sie Rollschwingen (23) aufweist, die unterhalb der schmalen Öffnung angeordnet sind und seitlich ausgespart sind, um die Achse nur am zylindrischen Teil aufzunehmen während ihrer Zufuhr und die durch abfallende Bahnen (25) verlängert sind, die jeweils die Achsen zwei Roll-Gleit-Schwingen (26, 27) zuführen, welche mit zwei Ausstoßern (28, 29) zusammenwirken, sowie einen Anschlag (30) aufweist, der vom Schieber getragen wird und dessen Innenfläche oberhalb desjenigen Teils der Achse angeordnet ist, der die Werkbühne (24) umfaßt um ein Rollen der Achse zu bewirken, bis sie eine vorgegebene Winkelstellung bezüglich ihrer Längsachse einnimmt, danach das Gleiten dieser Achse ohne zusätzliche Drehung bewirkt bis zur gewünschten Position, wobei der Anschlag zu diesem Zweck horizontal verschoben wird um ungefähr einen Achsendurchmesser bis jenseits der senkrechten Stellung der Ausstoßer (28, 29) und vertikal verschoben wird, im wesentlichen um das Maß der Achse (1), gemessen auf der Bühne (24) oberhalb der entsprechenden Roll-Gleit-Schwinge (27).

2. Vorrichtung nach Anspruch 1, dadurch gekennzeichnet, daß sie Blöcke (9) aufweist, die als Anschläge für die Achsen am Grundteil der Vorderwand (3) der Schurre (2) dienen sowie Bodenschienen (8) oberhalb der Bodenwand (7) dieser Schurre aufweist, wobei die Schienen bezüglich ihrer Achse einstellbar sind, derart, daß ihre Endfläche (21) in einen Abstand zu den Blöcken (9) gebracht werden kann, wodurch die genannte große Öffnung entsteht, deren Abmessung einer ganzen Anzahl von Achsen zusätzlich eines geringen Gesamtspiels entspricht.

3. Vorrichtung nach einem der vorhergehenden Ansprüche, dadurch gekennzeichnet, daß eine (27) der Roll-Gleit-Schwingen unterhalb desjenigen Teils der Achsen angeordnet ist, der die Werkbühne (24) umfaßt, und daß der Anschlag (30) wenigstens an einem Teil seiner Breite seitlich ausgespart ist um die Achsennur an ihrem zylindrischen Teil derart aufzunehmen, daß nach dem Ende der Rollphase die Achse bewegt wird mit ihrer Bühne in unterer Stellung.

4. Vorrichtung nach Anspruch 3, dadurch gekennzeichnet, daß wenigstens eine der Roll-Gleit-Schwingen prolifiert ist, damit am Ende der Bewegung des Schiebers die Achse kippt und in Halterungen (32) fällt in einer neuen Winkelstellung bezüglich ihrer Längsachse.

5. Vorrichtung nach einem der Ansprüche 1 und 2, dadurch gekennzeichnet, daß der Anschlag (30) in der Breite begrenzt ist oberhalb desjenigen Teils der Achse, der die Werkbühne (24) aufweist und daß die zweite Roll-Gleit-Schwinge (27) nicht unterhalb dieses Teils der Achse angeordnet ist, so daß am Ende der Rollphase die Achse winkelmäßig geführt wird mit der Werkbühne in der oberen Stellung.

FIG.1

0 067 760

## FIG.2